# EUROPEAN PATENT APPLICATION

(11) **EP 4 297 336 A1**
(43) Date of publication of application: **27.12.2023**
(21) Application number: 21930712.1
(22) Date of filing: 16.03.2021
(51) Int. Cl.: H04L 9/32

(54) **AUTHENTICATION METHOD, APPARATUS, AND STORAGE MEDIUM**

(71) Applicant: Huawei Technologies Co., Ltd., Shenzhen, Guangdong 518129 (CN)
(72) Inventor: SHI, Zijuan, Shenzhen, Guangdong 518129 (CN)
(74) Representative: Thun, Clemens
(86) International application number: PCT/CN2021/080994
(87) International publication number: WO 2022/193116

(57) **Abstract**

Embodiments of this application disclose an authentication method and apparatus, and a storage medium. The authentication method includes: obtaining authentication environment information, and determining estimated information of an authentication operation of an intelligent device based on the authentication environment information and historical authentication data, where the estimated information includes an estimated occurrence time and an estimated occurrence probability that are of the authentication operation, and an authentication manner used for performing the authentication operation. In this way, a hardware resource related to the intelligent device can be pre-started based on the estimated information. Authentication power consumption of the intelligent device can be effectively reduced, and user experience is improved.

## Description

### TECHNICAL FIELD

This application relates to the authentication field, and specifically, to an authentication method and apparatus, and a storage medium.

### BACKGROUND

Performing identity authentication on a user who requests to use an intelligent device is an important part of ensuring security of the intelligent device. The intelligent device includes a device such as an automobile, a smart home product, a mobile phone, or a computer. In the conventional technology, an example in which an intelligent device is an automobile is used. An authentication manner of the automobile includes Bluetooth, wireless fidelity (Wireless Fidelity, Wi-Fi), a fingerprint, an iris, or the like. Excessively large authentication power consumption affects available duration of the intelligent device, and also reduces user experience. Therefore, how to implement low-power authentication of an intelligent device is a problem worthy of study.

### SUMMARY

Embodiments of this application provide an authentication method and apparatus, and a storage medium. Estimated information of an authentication operation of an intelligent device is determined. For example, the estimated information may include an estimated occurrence time of the authentication operation and an estimated occurrence probability of the authentication operation, and an authentication manner used to perform the authentication operation. In this way, a hardware resource related to the intelligent device can be pre-started based on the estimated information, so that authentication power consumption can be effectively reduced.

According to a first aspect, an embodiment of this application provides an authentication method applied to an intelligent apparatus, and the method includes:
obtaining authentication environment information; determining estimated information of an authentication operation of an intelligent device based on the authentication environment information and historical authentication data, where the estimated information includes a first time, an occurrence probability, and a first authentication manner used to perform the authentication operation, the first time is an estimated occurrence time of the authentication operation, and the occurrence probability is an estimated occurrence probability of the authentication operation; and starting, at the first time or before the first time when the occurrence probability is greater than a probability threshold, a hardware resource that is of the intelligent device and that is used for performing the authentication operation by using the first authentication manner.

According to the authentication method in this embodiment of this application, the authentication environment information is obtained, and then the estimated information of the authentication operation of the intelligent device is determined based on the authentication environment information and the historical authentication data. In this way, the hardware resource related to the intelligent device can be pre-started based on the estimated information. Specifically, the estimated information includes the first time, the occurrence probability, and the first authentication manner used to perform the authentication operation. The hardware resource that is of the intelligent device and that is used for performing the authentication operation by using the first authentication manner is started at the first time or before the first time when the occurrence probability is greater than the probability threshold. According to the authentication method in this embodiment of this application, the hardware resource corresponding to the intelligent device is pre-started by estimating related information of the authentication operation, so that authentication power consumption of the intelligent device can be effectively reduced, and user experience is improved.

In some possible implementations, the authentication environment information includes one or more of time information, location information of the intelligent device, internal or external environment information of the intelligent device, and status information of an authentication user subject. The historical authentication data includes one or more of the following data: an authentication user identifier, an authentication manner, an authentication time, an authentication location, an attribute of a service associated with the authentication operation, a quantity of authentication failures, and internal or external environment information that is of the intelligent device and that corresponds to the authentication time. Attributes of services having a same authentication security level and a same service type are the same. In addition, the first time may be periodic or aperiodic. Specifically, the first time may be a time point or a time periodicity (that is, a time periodicity).

In some possible implementations, the method further includes: performing authentication on an identity of a user by using the first authentication manner when the user triggers the authentication operation.

In this embodiment of this application, after the hardware resource of the intelligent device corresponding to the first authentication manner is pre-started, the first authentication manner is used to perform authentication on the identity of the user when an authentication triggering operation of the user is detected.

In some possible implementations, the method further includes:
determining, based on the authentication environment information and the historical authentication data, an authentication threshold corresponding to the first authentication manner.

The performing authentication on an identity of a user by using the first authentication manner specifically includes:
performing authentication on the identity of the user based on the authentication threshold corresponding to the first authentication manner.

According to the authentication method in this embodiment of this application, the authentication threshold corresponding to the first authentication manner is further determined based on the authentication environment information and the historical authentication data. The authentication threshold includes a plurality of thresholds, for example, an authentication threshold and an alarm threshold, and the authentication operation is performed based on the authentication threshold. The authentication threshold is a threshold used to determine whether an identity authentication succeeds in the first authentication manner, and the alarm threshold is a related threshold used to determine whether the authentication operation of the user triggers an alarm operation in the first authentication manner.

In some possible implementations, the determining, based on the authentication environment information and the historical authentication data, an authentication threshold corresponding to the first authentication manner includes: determining, based on the authentication environment information and the historical authentication data, a risk level corresponding to the first authentication manner; and determining, based on the risk level, the authentication threshold corresponding to the first authentication manner.

According to the authentication method in this embodiment of this application, the risk level corresponding to the first authentication manner is first determined based on the authentication environment information and the historical authentication data, and then the authentication threshold corresponding to the first authentication manner is determined based on the risk level. A higher risk level indicates a higher authentication requirement reflected by the authentication threshold, so that the authentication requirement matches the authentication environment information. In this way, authentication security can be ensured, and authentication experience of the user can be improved. For example, a larger authentication threshold indicates a higher requirement, a higher risk level, and a larger authentication threshold. On the contrary, a smaller authentication threshold indicates a lower requirement, a lower risk level, and a smaller authentication threshold. Similarly, for example, a larger alarm threshold indicates a higher requirement, a higher risk level, and a larger alarm threshold. On the contrary, a smaller alarm threshold indicates a higher requirement, a higher risk level, and a smaller alarm threshold.

In some possible implementations, the method further includes: obtaining a quantity of authentication failures of the user; and adjusting, based on the quantity of authentication failures, the authentication threshold for performing authentication on the identity of the user by using the first authentication manner.

In this embodiment of this application, the authentication threshold during authentication is adjusted in time based on the authentication operation data (for example, the quantity of authentication failures) of the user, to ensure authentication security.

In some possible implementations, before the performing authentication on an identity of a user by using the first authentication manner, the method further includes: obtaining authentication environment information corresponding to a trigger moment at which the user triggers the authentication operation; and adjusting, based on the authentication environment information corresponding to the trigger moment, the authentication threshold for performing authentication on the identity of the user by using the first authentication manner.

In this embodiment of this application, when the authentication triggering operation of the user is detected, the authentication environment information at the trigger moment corresponding to the authentication triggering operation is obtained, and the authentication threshold for performing authentication on the identity of the user by using the first authentication manner is adjusted based on the authentication environment information corresponding to the trigger moment, so that the authentication threshold matches current authentication environment information, thereby improving authentication security and ensuring user experience.

In some possible implementations, the first time includes a time periodicity, and the method includes: starting, within the time periodicity when the occurrence probability is greater than the probability threshold, the hardware resource that is of the intelligent device and that is used for performing the authentication operation by using the first authentication manner.

In this embodiment of this application, the time periodicity is a periodic or aperiodic time periodicity. Different from an authentication solution of full-time standby, in the authentication method in this embodiment of this application, the hardware resource is started only in the time periodicity, so that power consumption used for authentication can be effectively reduced, a standby time of the intelligent device can be prolonged, and user experience can be improved.

In some possible implementations, the obtaining authentication environment information specifically includes: determining an authentication period based on the historical authentication data of the intelligent device; and obtaining the authentication environment information based on the authentication period.

In this embodiment of this application, a time rule of performing the authentication operation by the intelligent device is determined based on the historical authentication data, to obtain the authentication period. The step of obtaining the authentication environment information is performed within the authentication period, before the authentication period, or after the authentication period, to determine the estimated information of the authentication operation of the intelligent device. In brief, different from obtaining the authentication environment information in real time, in this application, the authentication period is determined to periodically obtain the authentication environment information, to further help reduce power consumption of the intelligent device.

In some possible implementations, the estimated information further includes first user information, and a user indicated by the first user information is a predicted user that triggers the authentication operation; and the method further includes: adjusting, when the occurrence probability is greater than the probability threshold, the intelligent device at the first time or before the first time based on historical usage data of the user indicated by the first user information.

In this embodiment of this application, the intelligent device is further adjusted, when the occurrence probability of the authentication operation is greater than the probability threshold, at the first time or before the first time based on the historical usage data of the user indicated by the first user information, so that the intelligent device is in a status that it is frequently used by the user which is indicated by the first user information. With high intelligence, this helps reduce operations that need to be performed by the user, and improves user experience.

In some possible implementations, the determining, based on the authentication environment information and the historical authentication data, the first authentication manner in the estimated information includes: determining, based on the authentication environment information and the historical authentication data, an authentication manner with a highest authentication priority of the authentication operation of the intelligent device as the first authentication manner.

In this embodiment of this application, when the authentication manner of the authentication operation is estimated, at least two authentication manners with different priorities are determined, the authentication manner with a highest priority in the at least two authentication manners is used as the first authentication manner, and authentication environment information is matched to determine one first authentication manner, to implement adaptive dynamic selection of the authentication manner.

In some possible implementations, before starting the hardware resource, the method further includes: obtaining a first distance between the intelligent device and an authentication user; determining a second authentication manner corresponding to the first distance based on the first distance and a mapping relationship, where the mapping relationship is a correspondence between an authentication manner and a distance; and updating the first authentication manner to the second authentication manner when the second authentication manner is different from the first authentication manner.

In this embodiment of this application, before the hardware resource corresponding to the first authentication manner is started, the first distance between the user and the intelligent device is obtained, and the first authentication manner is adaptively adjusted based on the first distance. With high intelligent, this effectively improves user experience of using the intelligent device.

In some possible implementations, after the hardware resource is started and before the user triggers the authentication operation, the method further includes: obtaining a second distance between the intelligent device and an authentication user; determining, based on the second distance and a mapping relationship, a second authentication manner corresponding to the second distance, where the mapping relationship is a correspondence between an authentication manner and a distance; and when the third authentication manner is different from the first authentication manner, closing the hardware resource of the intelligent device corresponding to the first authentication manner, and starting a hardware resource of the intelligent device corresponding to the third authentication manner.

In this embodiment of this application, after the hardware resource is started and before the authentication triggering operation of the user is detected, the second distance between the user and the intelligent device continues to be obtained, and the authentication manner used for performing authentication on the identity of the user is changed based on the second distance. In this way, the authentication manner is adaptively changed in real time based on the second distance, thereby reducing the operation that needs to be performed by the user, and improving user experience.

In some possible implementations, the authentication method further includes:
in response to a start operation of a fourth authentication manner of the intelligent device performed by the user, starting a hardware resource that is of the intelligent device and that is used for performing an authentication operation by using the fourth authentication manner..

In this embodiment of this application, in addition to the foregoing manner in which the intelligent apparatus automatically pre-starts the hardware resource, this embodiment of this application further provides the manner in which the related hardware resource is started in response to the start operation of the user, to meet authentication requirements in different scenarios.

In some possible implementations, the authentication method further includes:
obtaining status information of the intelligent device and/or the user; and
when the status information matches preset status information corresponding to a fifth authentication manner, starting a hardware resource that is of the intelligent device and that is used for performing an authentication operation by using the fifth authentication manner.

To meet authentication requirements in different scenarios, an embodiment of this application further provides the method in which the status information of the intelligent device and/or the user is detected, the status information is matched with the preset status information to determine the to-be-used fifth authentication manner, and the hardware resource of the intelligent device used for performing the authentication operation by using the fifth authentication manner is started, to start the related hardware resource through automatic detection, thereby reducing the operation used by the user and improving authentication experience of the user.

According to a second aspect, an embodiment of this application provides an authentication apparatus applied to an intelligent apparatus, and the authentication apparatus includes:
an obtaining unit, configured to obtain authentication environment information;
a determining unit, configured to determine estimated information of an authentication operation of an intelligent device based on the authentication environment information and historical authentication data, where the estimated information includes a first time, an occurrence probability, and a first authentication manner used to perform the authentication operation, the first time is an estimated occurrence time of the authentication operation, and the occurrence probability is an estimated occurrence probability of the authentication operation; and
a starting unit, configured to start, at the first time or before the first time when the occurrence probability is greater than a probability threshold, a hardware resource that is of the intelligent device and that is used for performing the authentication operation by using the first authentication manner.

According to the authentication apparatus in this embodiment of this application, the hardware resource corresponding to the intelligent device is pre-started by estimating related information of the authentication operation, so that authentication power consumption of the intelligent device can be effectively reduced, and user experience is improved.

In some possible implementations, the authentication apparatus further includes:
an authentication unit, configured to perform authentication on an identity of a user by using the first authentication manner when the user triggers the authentication operation.

In some possible implementations, the determining unit is further configured to:
determine, based on the authentication environment information and the historical authentication data, an authentication threshold corresponding to the first authentication manner.

The authentication unit is specifically configured to:
perform authentication on the identity of the user based on the authentication threshold corresponding to the first authentication manner. In some possible implementations, in the aspect of determining, based on the authentication environment information and the historical authentication data, an authentication threshold corresponding to the first authentication manner, the determining unit is specifically configured to:
determine, based on the authentication environment information and the historical authentication data, a risk level corresponding to the first authentication manner; and determine, based on the risk level, the authentication threshold corresponding to the first authentication manner.

In some possible implementations, the obtaining unit is further configured to obtain a quantity of authentication failures of the user.

The authentication apparatus further includes:
an adjusting unit, configured to adjust, based on the quantity of authentication failures, the authentication threshold for performing authentication on the identity of the user by using the first authentication manner.

In some possible implementations, before the authentication unit performs authentication on an identity of a user by using the first authentication manner,
the obtaining unit is further configured to obtain authentication environment information corresponding to a trigger moment at which the user triggers the authentication operation.

The authentication apparatus further includes:
the adjusting unit, configured to adjust, based on the authentication environment information corresponding to the trigger moment, the authentication threshold for performing authentication on the identity of the user by using the first authentication manner.

In some possible implementations, the first time includes a time periodicity, and the starting unit is specifically configured to:
start, within the time periodicity when the occurrence probability is greater than the probability threshold, the hardware resource that is of the intelligent device and that is used for performing the authentication operation by using the first authentication manner.

In some possible implementations, in the aspect of obtaining authentication environment information, the obtaining unit is specifically configured to:
determine an authentication period based on the historical authentication data of the intelligent device; and obtain the authentication environment information based on the authentication period.

In some possible implementations, the estimated information further includes first user information, and a user indicated by the first user information is a predicted user that triggers the authentication operation.

The authentication apparatus further includes:
an adjusting unit, configured to adjust, when the occurrence probability is greater than the probability threshold, the intelligent device at the first time or before the first time based on historical usage data of the user indicated by the first user information.

In some possible implementations, in the aspect of determining, based on the authentication environment information and the historical authentication data, the first authentication manner in the estimated information of the authentication operation of intelligent device, the determining unit is specifically configured to:
determine, based on the authentication environment information and the historical authentication data, an authentication manner with a highest authentication priority of the authentication operation of the intelligent device as the first authentication manner.

In some possible implementations, before the starting unit starts the hardware resource,
the obtaining unit is further configured to obtain a first distance between the intelligent device and an authentication user; and
the determining unit is further configured to determine a second authentication manner corresponding to the first distance based on the first distance and a mapping relationship, where the mapping relationship is a correspondence between an authentication manner and a distance.

The authentication apparatus further includes:
a processing unit, configured to update the first authentication manner to the second authentication manner when the second authentication manner is different from the first authentication manner.

In some possible implementations, after the starting unit starts the hardware resource and before the authentication apparatus detects that the user triggers the authentication operation,
the obtaining unit is further configured to obtain a second distance between the intelligent device and an authentication user; and
the determining unit is further configured to determine, based on the second distance and a mapping relationship, a third authentication manner corresponding to the second distance, where the mapping relationship is a correspondence between an authentication manner and a distance.

The authentication apparatus further includes:
a processing unit, configured to, when the third authentication manner is different from the first authentication manner, close the hardware resource of the intelligent device corresponding to the first authentication manner, and start a hardware resource of the intelligent device corresponding to the third authentication manner.

In some possible implementations, the authentication environment information includes one or more of time information, location information of the intelligent device, internal or external environment information of the intelligent device, and status information of an authentication user subject. The historical authentication data includes one or more of the following data: an authentication user identifier, an authentication manner, an authentication time, an authentication location, an attribute of a service associated with the authentication operation, a quantity of authentication failures, and internal or external environment information that is of the intelligent device and that corresponds to the authentication time. Attributes of services having a same authentication security level and a same service type are the same.

In some possible implementations, the starting unit is further configured to:
in response to a start operation of a fourth authentication manner of the intelligent device performed by the user, start a hardware resource that is of the intelligent device and that is used for performing an authentication operation by using the fourth authentication manner.

In some possible implementations, the obtaining unit is further configured to:
obtain status information of the intelligent device and/or the user.

The starting unit is further configured to:
when the status information matches preset status information corresponding to a fifth authentication manner, start a hardware resource that is of the intelligent device and that is used for performing an authentication operation by using the fifth authentication manner.

According to a third aspect, an embodiment of this application provides a chip system, where the chip system includes at least one processor, a memory, and an interface circuit. The memory, the interface circuit, and the at least one processor are interconnected by using a line. The at least one memory stores instructions, and when the instructions are executed by the processor, the method in the first aspect is implemented.

According to a fourth aspect, an embodiment of this application provides an intelligent device, including a processor, a memory, and a communications interface, where one or more programs are stored in the memory, and are configured to be executed by the processor, and the program includes instructions used to perform the steps in the method according to the first aspect.

According to a fifth aspect, an embodiment of this application provides a computer-readable storage medium, where the computer-readable storage medium stores a computer program, and the computer program is executed by a processor to implement the method according to the first aspect.

According to a sixth aspect, an embodiment of this application provides a computer program product. The computer program product includes instructions, and when the instructions are run on a computer, the computer is enabled to perform the authentication method according to the first aspect.

According to the authentication method and apparatus, and the storage medium provided in the embodiments of this application, the estimated information of the authentication operation of the intelligent device is first determined. The estimated information includes the estimated occurrence time and the estimated occurrence probability that are of the authentication operation of the intelligent device, and the authentication manner used to perform the authentication operation. In this way, the hardware resource related to the intelligent device can be pre-started based on the estimated information, and the hardware resource can be started timely, thereby reducing the authentication power consumption effectively and improving user experience of using the intelligent device.

### BRIEF DESCRIPTION OF DRAWINGS

To describe technical solutions in embodiments of this application more clearly, the following briefly describes the accompanying drawings used for describing the embodiments. It is clear that the accompanying drawings in the following descriptions show merely some embodiments of this application, and a person of ordinary skill in the art may still derive other drawings from these accompanying drawings without creative efforts.
FIG. 1 a schematic diagram of a scenario of an authentication method according to an embodiment of this application;
FIG. 2 is a schematic flowchart of an authentication method according to an embodiment of this application;
FIG. 3 is a specific schematic flowchart of an authentication method according to an embodiment of this application;
FIG. 4 is a component block diagram of functional units of an authentication apparatus according to an embodiment of this application;
FIG. 5 is a schematic diagram of a structure of an intelligent device according to an embodiment of this application;
FIG. 6 is a schematic diagram of a specific structure of an intelligent device according to an embodiment of this application; and
FIG. 7 is a schematic diagram of function division of an intelligent device according to an embodiment of this application.

### DESCRIPTION OF EMBODIMENTS

The following clearly describes the technical solutions in embodiments of this application with reference to the accompanying drawings in embodiments of this application. It is clear that the described embodiments are some but not all of embodiments of this application. All other embodiments obtained by a person of ordinary skill in the art based on embodiments of this application without creative efforts shall fall within the protection scope of this application.

In this specification, claims, and accompanying drawings of this application, the terms "first", "second", "third", "fourth", and the like are intended to distinguish between different objects but do not indicate a particular order. In addition, the terms "comprise", "include", and any variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

An "embodiment" mentioned in this specification means that a specific feature, structure, or characteristic described with reference to the embodiment may be included in at least one embodiment of this application. The phrase appearing in various locations in this specification does not necessarily mean a same embodiment, and neither means an independent or alternative embodiment mutually exclusive with another embodiment. It is explicitly and implicitly understood by a person skilled in the art that embodiments described in this specification may be combined with another embodiment.

In the conventional technology, because an intelligent device cannot implement low power consumption authentication, usage duration of the intelligent device is severely affected, and user experience is reduced. Therefore, an embodiment of this application provides an authentication method applied to an intelligent apparatus. The intelligent apparatus includes an intelligent device or a chip. The method may be performed by the intelligent device, or may be performed by an authentication apparatus (such as a chip) disposed in the intelligent device.

In some possible implementations, the authentication apparatus is disposed on an intelligent device. The intelligent device may be a device that requires human-machine interaction, such as a vehicle, an intelligent robot, a smart home product, a mobile phone, a computer, or an intelligent wearable device. The smart home product includes a speaker, a refrigerator, an access control system, an air conditioner, a television, a projector, a printer, and the like. The computer includes a notebook computer, a desktop computer, a tablet computer, and the like. The intelligent wearable device includes a smart watch, a headset, a sports band, and the like. In this embodiment of this application, a type of the intelligent device is not limited, and may include but is not limited to the listed condition. The technology may further be used to perform user identity authentication, implement differentiated service provisioning and permission control.

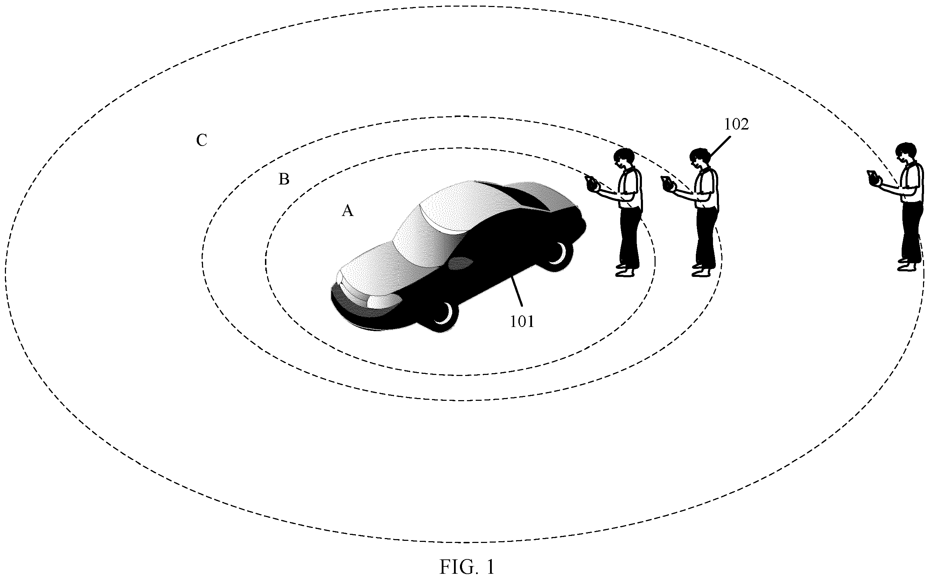

FIG. 1 is a schematic diagram of a scenario of an authentication method according to an embodiment of this application. For example, an intelligent device is a vehicle 101. Assuming that an authentication apparatus is disposed on the vehicle 101, when performing an authentication method, the authentication apparatus may first obtain authentication environment information of the vehicle 101, and then process based on the authentication environment information and historical authentication data of the vehicle 101, to determine estimated information of an authentication operation of the intelligent device. The estimated information includes a first time, an occurrence probability, and a first authentication manner used for performing the authentication operation. The first time is an estimated occurrence time of the authentication operation, and the occurrence probability is an estimated occurrence probability of the authentication operation. A hardware resource that is of the intelligent device and that is used for performing the authentication operation by using the first authentication manner is started in advance at the first time or before the first time when the occurrence probability is greater than probability threshold. The hardware resource corresponding to the intelligent device is pre-started by estimating related information of the authentication operation, so that authentication power consumption of the intelligent device can be effectively reduced, and user experience is improved. In addition, before a user 102 triggers authentication, related hardware resource is started in advance, and the user does not need to select an authentication manner, thereby effectively reducing authentication interaction operations of the user and improving vehicle usage experience of the user.

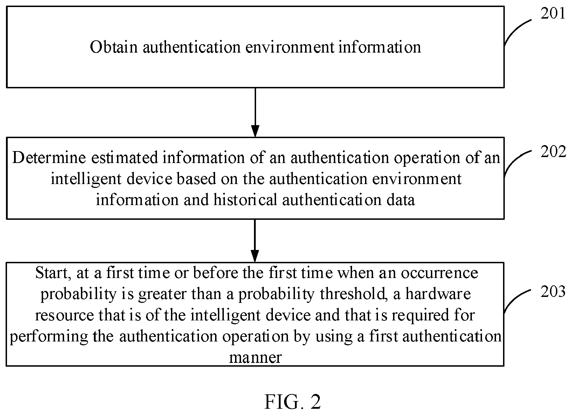

The following specifically describes an authentication method with reference to FIG. 2. FIG. 2 is a schematic flowchart of an authentication method according to an embodiment of this application. The authentication method includes the following steps.

201: Obtain authentication environment information.

Specifically, the authentication environment information is one or more pieces of impact parameter information that may be used to determine an authentication manner of an intelligent device. For example, the authentication environment information includes one or more (more means at least two) of time information, location information of the intelligent device, internal or external environment information of the intelligent device, and status information of an authentication user subject. The internal environment information of the intelligent device refers to status information of the intelligent device that affects selection of an authentication manner, for example, information such as network connection status of the intelligent device, system stability of the intelligent device, and memory usage of the intelligent device. The external environment information of the intelligent device refers to specific information that affects selection of the authentication manner and an environment in which the intelligent device is located, for example, information such as radio condition, an illumination condition, and a noise condition of the environment in which the intelligent device is located. The status information of the authentication user subject refers to information related to the authentication user that affects the selection of the authentication manner, such as locations of the authentication user, facial features, voice features, and activity statuses of the user. In the embodiments of this application, a type of the authentication environment information and the like are not limited, and may include but is not limited to the examples.

In particular, the location information of the intelligent device may be determined by using a geo-fencing technology, for example, the location information of the intelligent device is determined based on a global positioning system (Global Positioning System, GPS), or the location information of the intelligent device is determined based on a wireless positioning technology, for example, the location information of the intelligent device is determined based on one or more of a wireless local area network (Wireless Local Area Network, WLAN), Bluetooth, ZigBee (ZigBee), or an ultra wide band (Ultra Wide Band, UWB), or the location information of the intelligent device is determined based on an IP address. In this embodiment of this application, a specific method for obtaining the location information of the intelligent device is not limited, and may include but is not limited to the examples.

202: Determine estimated information of an authentication operation of an intelligent device based on the authentication environment information and historical authentication data, where the estimated information includes a first time, an occurrence probability, and a first authentication manner used to perform the authentication operation, the first time is an estimated occurrence time of the authentication operation, and the occurrence probability is an estimated occurrence probability of the authentication operation.

Specifically, the historical authentication data includes one or more of the following data (more refers to more than two): an authentication user identifier (identifier, ID), an authentication manner, an authentication time, an authentication location, an attribute of a service associated with the authentication operation, a quantity of authentication failures, and internal or external environment information that is of the intelligent device and that corresponds to the authentication time. Attributes of services having a same authentication security level and a same service type are the same. In this embodiment of this application, a type of the historical authentication data and the like are not limited, and may include but is not limited to the examples.

In addition, the first time may be periodic or non-periodic. Specifically, the first time may be a time point or a time periodicity (that is, a time periodicity). For example, the first time may be 8 a.m. every day, 9 p.m. every day, or 0 a.m. of the first day of every month. The first time may further be 8 a.m. to 9 a.m. every day, or 9 p.m. to 10 p.m. every day, or 6 a.m. to 7 a.m. of the first day of every month.

Optionally, the estimated information of the authentication operation of the intelligent device is determined based on a dynamic identity authentication model and the obtained authentication environment information. The dynamic identity authentication model is obtained through pre-training based on the historical authentication data. The following describes a training process of the dynamic identity authentication model by using a specific example, and details are not described herein again.

203: Start, at the first time or before the first time when the occurrence probability is greater than a probability threshold, a hardware resource that is of the intelligent device and that is used for performing the authentication operation by using the first authentication manner.

Specifically, the hardware resource that is of the intelligent device and that is used for performing the authentication operation by using the first authentication manner is started at the first time or before the first time when the determined occurrence probability is greater than the probability threshold, where the probability threshold may be set based on an actual situation, and is not specifically limited herein.

It can be learned that, according to the authentication method in this embodiment of this application, the authentication environment information is obtained, and then the estimated information of the authentication operation of the intelligent device is determined based on the authentication environment information and the historical authentication data. In this way, the hardware resource related to the intelligent device can be pre-started based on the estimated information, so that authentication power consumption of the intelligent device can be effectively reduced, and user experience is improved.

It should be specially noted that, in the conventional technology, an identity authentication solution between the authentication user and the intelligent device and an authentication solution (one or more authentication manners, a plurality of authentication manners such as voiceprint recognition and face recognition, when a quantity of voiceprint recognition failures reaches a specific value, face recognition is performed, that is, an execution sequence of the plurality of authentication manners is pre-determined) of a same service are fixed. Authentication solutions which are performed based on scenarios without differentiation result in poor user experience and prominent security vulnerability. According to the authentication method in this embodiment of this application, information estimation is performed on the authentication operation based on authentication environment information, to determine one first authentication manner of the authentication operation. Different first authentication manners are dynamically determined based on changes of scenarios. This can reduce authentication power consumption of the intelligent device, reduce an authentication interaction operation used by the user, enhance user experience, and ensure authentication security.

In addition, especially, in the conventional technology, the status of the authentication user subject does not affect determining of the authentication manner. As a result, the determined authentication manner is inconvenient for the authentication user to perform the authentication operation. For example, when the authentication user holds an object in a hand, while the authentication manner is fingerprint recognition, the user cannot conveniently complete the authentication operation, and authentication experience of the user is poor. For another example, when the authentication user wears sunglasses or a mask, and the authentication manner is face recognition or voiceprint recognition in this case, because the sunglasses mask some parts of the face, and the mask reduces the volume and the like of the user, authentication accuracy is low, and the user needs to remove the sunglasses or the mask, which is very inconvenient. However, according to the authentication method in this embodiment of this application, because the obtained authentication environment information includes the status information of the authentication user subject, a recommended first authentication manner is determined based on the status of the authentication user, so that the first authentication manner is more suitable for the operation of the authentication user, and user experience is effectively improved.

In some possible implementations, the intelligent device has at least two authentication manners, including authentication manners such as visual recognition, acoustic recognition, Bluetooth authentication, QR code scanning, and password. The visual recognition includes face recognition, iris recognition, and the like. The acoustic recognition may be voiceprint recognition. An in-vehicle system of a vehicle is used as an example. Different authentication manners have different application scenarios. Here are some examples.

Bluetooth key verification: If a Bluetooth key is matched, a vehicle owner account is verified.

Voiceprint verification: The user says "Open the door, Xiaobai" outside the vehicle. Based on a matching degree of the voiceprint, the user is granted vehicle-related permissions, such as opening a door, driving the vehicle, and personalized setting of the vehicle.

Static face recognition verification: After the user enters the vehicle, the system starts face recognition. If the face recognition is successful, the system grants the driving permission to the user.

Dynamic face recognition verification: After the dynamic face recognition succeeds, a payment permission is started.

QR code verification: The user uses a mobile phone to scan the QR code to confirm user identity.

Login password verification: The system verifies the user account and password for login.

Correspondingly, different authentication manners relate to different hardware resources of the intelligent device, for example, a camera, a microphone, and a Bluetooth module. Specifically, the camera corresponds to an authentication manner such as visual recognition or QR code, the microphone corresponds to an authentication manner such as acoustic recognition, and the Bluetooth module corresponds to an authentication manner such as Bluetooth authentication.

In some possible implementations, the authentication method further includes:
performing authentication on an identity of a user by using the first authentication manner when the user triggers the authentication operation.

In this embodiment of this application, after the estimated information of the authentication operation of the intelligent device is obtained based on the authentication environment information, and then the hardware resource of the intelligent device corresponding to the first authentication manner is pre-started based on the estimated information. When the authentication triggering operation of the user is detected, the first authentication manner is used to perform authentication on the identity of the user, to ensure that user authentication is normally performed and authentication power consumption of the intelligent device is reduced.

The authentication triggering operation may be a voice triggering operation, a specific instruction triggering operation, or the like. A vehicle is used as an example. The voice triggering operation may include controlling the vehicle to open a door, playing music, and the like by using a voice. For example, when the instruction voice "Open the door, Xiaobai" is received, the identity authentication is triggered. Likewise, specific instructions may include a payment instruction, a vehicle start instruction, a Bluetooth control instruction, an account login instruction, and the like. When the specific instruction is detected, the identity authentication is triggered. The vehicle start instruction may be generated by pressing a start button in the vehicle. For example, the face recognition is started when the vehicle start instruction is received. The Bluetooth control instruction includes unlocking, locking, raising a window, lowering a window, opening and closing a trunk, and searching for the vehicle. For example, when the Bluetooth key is used to unlock the vehicle, the authentication is triggered when the vehicle receives a Bluetooth unlocking request. After entering the account and password, the user clicks the login button to generate an account login instruction, and the identity authentication is performed according to the account login instruction.

In some possible implementations, step 201 specifically includes:
determining an authentication period based on the historical authentication data of the intelligent device; and obtaining the authentication environment information based on the authentication period.

A time rule of performing the authentication operation by the intelligent device is determined based on the historical authentication data of the period or all historical authentication data of the intelligent device, to obtain the authentication period. The step of obtaining the authentication environment information is performed within the authentication period, before the authentication period, or after the authentication period, to determine the estimated information of the authentication operation of the intelligent device. Simply speaking, different from obtaining the authentication environment information in real time, in this application, a high-frequency authentication period is determined, to periodically obtain the authentication environment information based on the authentication period, thereby further helping reduce power consumption of the intelligent device.

Particularly, a specific execution rule for obtaining the authentication environment information based on the authentication period may be set according to an actual requirement, for example, obtaining the authentication environment information in the authentication period, obtaining the authentication environment information in a period before the authentication period, or obtaining the authentication environment information in a period after the authentication period. A specific time length of the foregoing period may be set according to an actual situation, for example, the time length may be 30 seconds, 1 minute, 5 minutes, or 10 minutes.

The in-vehicle system is used as an example. It is assumed that an authentication time rule of the vehicle is determined after statistical analysis processing is performed on the historical authentication data of a previous month or a previous half year of the in-vehicle system. For example, the authentication operation is performed at 7:30 a.m. and 6:30 p.m. every Monday. Therefore, it may be determined that the authentication period is 7:30 a.m. every Monday and 6:30 p.m. every Monday. For example, if the authentication environment information is obtained five minutes before the authentication period, the authentication environment information is obtained once at 7:25 a.m. on each Monday and 6:25 p.m. on each Monday, and subsequent processing is performed based on the authentication environment information to obtain the estimated information.

In some possible implementations, the determining the first authentication manner in the estimated information based on the authentication environment information and the historical authentication data in step 202 includes:
determining, based on the authentication environment information and the historical authentication data, an authentication manner with a highest authentication priority of the authentication operation of the intelligent device as the first authentication manner.

When the authentication manner of the authentication operation is estimated, the authentication environment information is matched to determine the first authentication manner with the highest authentication priority, to implement adaptive dynamic selection of the authentication manner.

Specifically, it is assumed that the intelligent device has K authentication manners, where K is a positive integer. When the first authentication manner is estimated, at least two authentication manners with different priorities of the authentication operation may be determined in advance. For example, each time the first authentication manner of the authentication operation is estimated, two authentication manners, three authentication manners, or K authentication manners with different priorities are first obtained. The priority indicates the recommendation level of the authentication manner in the authentication environment corresponding to the authentication environment information. A higher priority indicates a higher recommendation level. Then, the authentication manner with the highest priority is determined as the first authentication manner among the two authentication manners, three authentication manners, or K authentication manners.

In some possible implementations, the authentication method further includes:
determining, based on the authentication environment information and the historical authentication data, an authentication threshold corresponding to the first authentication manner.

According to the authentication method in this embodiment of this application, the authentication threshold corresponding to the first authentication manner is further determined based on the authentication environment information and the historical authentication data, to perform authentication on the user based on the authentication threshold. It should be understood that when the value/measurement value of an authentication object is within a specific range of the authentication threshold, it is considered that the user authentication succeeds. For example, when the value/measurement value of the authentication object is less than or equal to the authentication threshold, it is considered that the user authentication succeeds; or when the value/measurement value of the authentication object is greater than the authentication threshold, it is considered that the user authentication succeeds. This is not specifically limited herein, and may be set in a specific implementation process. The authentication threshold may include one or more of the following thresholds, including an authentication threshold and an alarm threshold. The authentication threshold is a threshold used to determine whether identity authentication succeeds in the first authentication manner, and the alarm threshold is a related threshold used to determine whether the authentication operation of the user triggers an alarm operation in the first authentication manner.

For example, the face recognition is used as an example. When an authentication standard is a face matching degree, the authentication threshold may be a face matching degree threshold, for example, 98% or 99%. When the face matching degree obtained by calculating the face of the authentication user and face or face related information (such as a facial feature vector) of the authorized user that is pre-stored in the intelligent device is greater than or equal to the face matching degree threshold, the face recognition of the authentication user succeeds. A related alarm mechanism is further set in the face recognition authentication manner. For example, when the quantity of face recognition failures is greater than a quantity of times, an alarm module, for example, an audible and visual alarm of the intelligent device is started. The quantity of times is the alarm threshold, for example, may be set to 3, 4, or 5.

It can be learned that the authentication threshold corresponding to the first authentication manner is determined based on the authentication environment information and the historical authentication data, so that the authentication threshold changes with the authentication environment information. This can ensure authentication security and ensure authentication experience of the user, and avoid the phenomenon that the authentication process is not smooth due to a fixed authentication threshold, which may lead to excessively long authentication time and then affect user experience. In some possible implementations, the determining, based on the authentication environment information and the historical authentication data, an authentication threshold corresponding to the first authentication manner specifically includes:
determining, based on the authentication environment information and the historical authentication data, a risk level corresponding to the first authentication manner; and determining, based on the risk level, the authentication threshold corresponding to the first authentication manner.

According to the authentication method in this embodiment of this application, the risk level corresponding to the first authentication manner is first determined based on the authentication environment information and the historical authentication data, and then the authentication threshold corresponding to the first authentication manner is determined based on the risk level. A higher risk level indicates a higher authentication requirement reflected by the authentication threshold, so that the authentication requirement matches the authentication environment information. In this way, authentication security can be ensured, and authentication experience of the user can be improved. For example, a larger authentication threshold indicates a higher requirement, a higher risk level, and a larger authentication threshold. On the contrary, a smaller authentication threshold indicates a lower requirement, a lower risk level, and a smaller authentication threshold. Similarly, for example, a larger alarm threshold indicates a higher requirement, a higher risk level, and a larger alarm threshold. On the contrary, a smaller alarm threshold indicates a higher requirement, a higher risk level, and a smaller alarm threshold.

The risk level may have three levels: high, medium, and low. A specific type of the risk level is not specially limited, and may include but is not limited to an example. For one authentication manner, different risk levels correspond to different authentication thresholds. It is assumed that a medium level is a default authentication threshold of the authentication manner.

For example, the face recognition is used as an example. When it is determined, based on the authentication environment information and the historical authentication data, that the risk level corresponding to the first authentication manner is a high level, the authentication threshold for face recognition needs to be increased. For example, the face matching degree threshold is increased from 98% to 99%. The alarm threshold needs to be decreased. For example, the alarm threshold for the quantity of face recognition failures is decreased from 4 to 3. However, when it is determined, based on the authentication environment information and the historical authentication data, that the risk level corresponding to the first authentication manner is a low level, the authentication threshold for face recognition needs to be decreased. For example, the face matching degree threshold is reduced from 98% to 97%. The alarm threshold needs to be increased, for example, the alarm threshold for the quantity of face recognition failures is increased from 4 to 5.

In some possible implementations, when the first time of the authentication operation that is determined based on the authentication environment information and the historical authentication data is a time point, the time point may be periodic or aperiodic, and there may be a plurality of methods for controlling starting and closing of the hardware resource based on the time point. In a first method, when the occurrence probability is greater than the probability threshold, the hardware resource of the intelligent device used for performing the authentication operation by using the first authentication manner may be started at the time point. In addition, it may be further set that the hardware resource is automatically closed after the hardware resource starts for a time a (the length of a may be freely adjusted, for example, 1 minute, 5 minutes, or 10 minutes). In a second method, the hardware resource of the intelligent device used for performing the authentication operation by using the first authentication manner may be started at a time b (a value of b may be freely adjusted, for example, 1 minute, 2 minutes, or 3 minutes) before the time point arrives. Similarly, it may be set that the hardware resource is automatically closed after the hardware resource is started for the time a. It is set that the hardware resource is automatically closed after the hardware resource corresponding to the first authentication manner is started for the time a, so that electric energy of the intelligent device is saved and a standby time of the intelligent device is prolonged.

In some possible implementations, the first time includes a time periodicity, and the method includes: starting, within the time periodicity when the occurrence probability is greater than the probability threshold, the hardware resource that is of the intelligent device and that is used for performing the authentication operation by using the first authentication manner.

When the first time of the authentication operation determined based on the authentication environment information and the historical authentication data is a time periodicity, the time periodicity is a periodic or non-periodic time periodicity. Different from an authentication solution in a full-time standby manner, in the authentication method in this embodiment of this application, the hardware resource is started only in the time periodicity, so that power consumption used for authentication can be effectively reduced, the standby time of the intelligent device can be prolonged, and user experience can be improved.

It should be noted that, the hardware resource of the intelligent device used for performing the authentication operation by using the first authentication manner may be first started at a time c (a value of c may be freely adjusted, for example, 1 minute, 2 minutes, or 3 minutes) before the time periodicity arrives. In this way, the time when the hardware resource is in a startup status is in a time periodicity from the time c to the end of the time periodicity. For example, it is assumed that the time periodicity is 8:00 a.m. to 9:00 a.m. every day, and c is 1 minute, the hardware resource is started from 7:59 a.m. to 9:00 a.m. every day.

In some possible implementations, the estimated information further includes first user information, and a user indicated by the first user information is a predicted user that triggers the authentication operation; and the authentication method further includes:
adjusting, when the occurrence probability is greater than the probability threshold, the intelligent device at the first time or before the first time based on historical usage data of the user indicated by the first user information.

The intelligent device is further adjusted, when the occurrence probability of the authentication operation is greater than the probability threshold, at the first time or before the first time based on the historical usage data of the user indicated by the first user information, so that the intelligent device is in a status that it is frequently used by the user which is indicated by the first user information. With high intelligence, this helps reduce operations that need to be performed by the user, and improves user experience.

Specifically, the historical usage data is related data when a logged-in user uses the intelligent device. Using a vehicle as an example, the historical usage data includes a height and an angle of a vehicle seat, a temperature and a usage time of an air conditioner, a volume of music playback, a status of starting various types of software, and the like. Statistical analysis processing is performed based on the historical usage data of the user to obtain habit data of the user, and the intelligent device is adjusted in advance based on the habit data at the first time or before the first time. The vehicle is used as an example. It is assumed that the habit data of the user obtained based on the historical usage data of the user indicated by the first user information are an air conditioner temperature of 23°C, a seat angle of 100°, a seat height of 30 mm (mm), and navigation software which is started. In this case, at the first time or before the first time, based on the habit parameters, the air conditioner temperature of the vehicle is adjusted to 23°C, the height of the seat of the vehicle is adjusted to 30 mm, the angle of the seat of the vehicle is adjusted to 100°, and the navigation software is started.

In some possible implementations, the authentication method further includes:
obtaining a quantity of authentication failures of the user; and adjusting, based on the quantity of authentication failures, the authentication threshold for performing authentication on the identity of the user by using the first authentication manner.

In a user authentication process, authentication operation data (for example, the quantity of authentication failures) of the user is counted, and the authentication threshold for performing authentication on the identity of the user by using the first authentication manner is adjusted in time based on the quantity of authentication failures, so that the authentication threshold adapts to a change of the authentication operation of the user, thereby further enhancing authentication security.

In some possible implementations, before the performing authentication on an identity of a user by using the first authentication manner, the authentication method further includes:
obtaining authentication environment information corresponding to a trigger moment at which the user triggers the authentication operation; and adjusting, based on the authentication environment information corresponding to the trigger moment, the authentication threshold for performing authentication on the identity of the user by using the first authentication manner.

Specifically, in this embodiment of this application, when the authentication triggering operation of the user is detected, the authentication environment information at the trigger moment corresponding to the authentication triggering operation is obtained. Before authentication comparison is performed, the authentication threshold for performing authentication on the identity of the user by using the first authentication manner is adjusted based on the authentication environment information corresponding to the trigger moment, so that the authentication threshold matches current authentication environment information, thereby improving authentication security and ensuring user experience.

In an example in which the authentication environment information includes time information and location information of the intelligent device, the predicted first authentication manner is a face recognition authentication manner, and the authentication environment information at the trigger moment of the authentication triggering operation indicates that the location of the intelligent device is a public place, the time is a late night time periodicity, and the authentication risk is relatively high. In this case, an authentication requirement for face recognition is improved based on the authentication environment information at the trigger moment, that is, the authentication threshold is adjusted, to improve the authentication requirement reflected by the authentication threshold. For a method for adjusting the authentication threshold by matching the authentication requirement, refer to the foregoing description. Details are not described herein again.

A specific method for adjusting, based on the authentication environment information corresponding to the trigger moment, the authentication threshold for performing authentication on the identity of the user by using the first authentication manner is as follows: the authentication requirement reflected by the authentication threshold matches the authentication environment information corresponding to the trigger moment. In other words, the authentication threshold and/or the authentication alarm threshold are adjusted based on the risk level corresponding to the authentication environment information corresponding to the trigger moment, so that the authentication threshold and/or the authentication alarm threshold match the current risk, to improve authentication security.

In addition, in some possible implementations, the authentication manner may be further switched based on the authentication environment information corresponding to the trigger moment, interference and error impact of a specific environment during authentication on the authentication manner are considered, and a proper authentication manner is dynamically loaded based on the specific environment status during authentication. For example, ambient light affects the accuracy of face recognition, and the noise affects the accuracy of voiceprint recognition. When the illumination condition at the trigger moment is not suitable for face recognition while the currently used first authentication manner is face recognition, the face recognition authentication manner is controlled to be stopped, and an authentication manner that does not depend on the illumination condition and has a highest priority, such as a voiceprint recognition authentication manner, is selected from the at least two authentication manners determined in step 202, and the microphone is turned on to perform voiceprint recognition authentication.

In some possible implementations, before starting the hardware resource, the authentication method further includes:
obtaining a first distance between the intelligent device and an authentication user; determining a second authentication manner corresponding to the first distance based on the first distance and a mapping relationship, where the mapping relationship is a correspondence between an authentication manner and a distance; and updating the first authentication manner to the second authentication manner when the second authentication manner is different from the first authentication manner.

In this embodiment of this application, mapping relationships between various authentication manners and usage distances corresponding to the authentication manners are preset based on actual application requirements, and specific correspondences between the mapping relationships are not specially limited. Before the hardware resource corresponding to the first authentication manner is started, the first distance between the user and the intelligent device is obtained, and the first authentication manner is adaptively adjusted based on the first distance. With high intelligent, this effectively improves user experience of using the intelligent device.

For example, with reference to FIG. 1, it is assumed that a usage distance of a Bluetooth key is 0 m to 10 m (m), and a Bluetooth coverage area of a vehicle 101 is an area C; a usage distance of voiceprint recognition is 0 m to 3 m, and a voiceprint recognizable area is an area B; and a usage distance of QR code scanning and recognition is 0 m to 1 m, and an area in which a QR code can be scanned is an area A. When the at least two authentication manners of the authentication operation determined based on the authentication environment information are a Bluetooth key, QR code scanning, and voiceprint recognition, the authentication manner with the highest priority is the Bluetooth key. Before the Bluetooth module of the intelligent device is started, the first distance between the intelligent device (for example, the vehicle 101) and the authentication user 102 is obtained, and it is determined, based on the first distance and the mapping relationship, that the authentication manner corresponding to the first distance is voiceprint recognition (that is, the authentication user 102 is located in the area B but is located outside the area A), and the voiceprint recognition is used as a new first authentication manner to turn on the microphone of the intelligent device.

There may be a plurality of methods for obtaining the first distance. A specific method for obtaining the first distance is not particularly limited. For example, the first distance between the intelligent device and the user may be determined by using location information of an intelligent terminal of the user and location information of the intelligent device. In a possible implementation, the intelligent terminal sends the location information of the intelligent terminal (for example, location information determined by using a GPS or Bluetooth technology) to a background server in real time, and the intelligent device also sends the location information of the intelligent device to the background server in real time. In this way, the background server may determine a first distance between the intelligent terminal and the intelligent device in real time, and deliver the first distance to the intelligent device, so that the intelligent device adaptively adjusts the first authentication manner based on the first distance.

In some possible implementations, after the hardware resource is started and before the user triggers the authentication operation, the authentication method further includes:
obtaining a second distance between the intelligent device and an authentication user;
determining, based on the second distance and a mapping relationship, a third authentication manner corresponding to the second distance, where the mapping relationship is a correspondence between an authentication manner and a distance; and
when the third authentication manner is different from the first authentication manner, closing the hardware resource of the intelligent device corresponding to the first authentication manner, and starting a hardware resource of the intelligent device corresponding to the third authentication manner.

In this embodiment of this application, after the hardware resource is started and before the authentication triggering operation of the user is detected, the second distance between the user and the intelligent device continues to be obtained, and the authentication manner used for performing authentication on the identity of the user is changed based on the second distance. In this way, the authentication manner is changed in real time based on the second distance, and the authentication manner is adaptively changed, thereby reducing the operation that needs to be performed by the user, and improving user experience. A method for obtaining the second distance is the same as the method for obtaining the first distance. Details are not described again.

For example, when the at least two authentication manners of the authentication operation determined based on the authentication environment information are a Bluetooth key, QR code scanning, and voiceprint recognition, the authentication manner with the highest priority is the Bluetooth key. With reference to FIG. 1, after the Bluetooth module of the intelligent device is started, the second distance between the intelligent device (for example, the vehicle 101) and the authentication user 102 is obtained, and it is determined, based on the second distance and the mapping relationship, that the authentication manner corresponding to the second distance is voiceprint recognition (that is, the authentication user 102 enters the area B from the area C but does not enter the area A), the Bluetooth module of the intelligent device is turned off, and the microphone of the intelligent device is turned on. As the second distance changes, when it is found that the authentication manner corresponding to the second distance is QR code scanning and recognition (that is, the authentication user 102 enters the area A from the area B), the microphone is turned off, and the camera of the intelligent device is turned on.

In some possible implementations, the authentication method further includes:
in response to a start operation of a fourth authentication manner of the intelligent device performed by the user, starting a hardware resource that is of the intelligent device and that is used for performing an authentication operation by using the fourth authentication manner.

The start operation may be the triggering operation performed by the user on a soft key or a physical key related to the fourth authentication manner, to start the hardware resource that is of the intelligent device and that is used for performing the authentication operation by using the fourth authentication manner. The fourth authentication manner may be any one of authentication manners of the intelligent device. For example, the vehicle is used as an example of the intelligent device, and the fourth authentication manner is face recognition. A soft key for face recognition is displayed on a display screen of an in-vehicle infotainment of the vehicle. The user may touch the key to determine to start face recognition, and then trigger starting of the hardware resource, for example, the camera, related to face recognition.

In this embodiment of this application, in addition to the foregoing manner of automatically pre-starting the hardware resource based on the estimated information, this embodiment of this application further provides a manner of starting a related hardware resource in response to the start operation of the user, to meet authentication requirements in different scenarios. When the hardware resource is not started, the hardware resource may be started in response to the start operation of the user, to meet the authentication requirement of the user.

In some possible implementations, the authentication method further includes:
when the status information matches preset status information corresponding to a fifth authentication manner, obtaining status information of the intelligent device and/or the user; and starting a hardware resource that is of the intelligent device and that is used for performing an authentication operation by using the fifth authentication manner.

To meet authentication requirements in different scenarios, an embodiment of this application further provides the method in which the status information of the intelligent device and/or the user is detected, the status information is matched with the preset status information to determine the to-be-used fifth authentication manner, and the hardware resource of the intelligent device used for performing the authentication operation by using the fifth authentication manner is started, to start the related hardware resource through automatic detection, thereby reducing the operation used by the user and improving authentication experience of the user.

The status information is used to represent a status of the intelligent device and/or an associated user of the intelligent device. Actually, the correspondence between the fifth authentication manner and the preset status information may be preset, and the fifth authentication manner may be any one of authentication manners of the intelligent device. The vehicle is used as an example of the intelligent device. It is assumed that the fifth authentication manner is face recognition. The preset status information of face recognition is information indicating that the user performs the operation on the vehicle, for example, status information such as opening a door, closing a door, opening a window, opening the air conditioner, starting the vehicle, and stepping on the throttle. When it is detected that the status information of the vehicle is the same as the preset status information, for example, it is detected that the user gets on the vehicle or closes a door, face recognition is triggered to start, that is, the camera related to face recognition is started.

The status of the associated user of the intelligent device may be user subject status information, for example, a gesture or a voice. The preset status information may be a preset gesture or a triggering voice, and a triggering gesture or the triggering voice may be preset for different fifth authentication manners. For example, a "like" gesture is used to start voiceprint recognition, and a "scissors" gesture is used to start face recognition. When a corresponding gesture is detected, a corresponding hardware resource of the fifth authentication manner is started.

The preset triggering voice may be "starting face recognition". During voice comparison, whether a text corresponding to an input voice is the same as a text of a preset triggering voice may be compared. If the texts are the same, an associated hardware resource for face recognition is started through voice comparison. In addition to the text comparison, whether voiceprint features of an input voice are the same as preset voiceprint features of the triggering voice may be further compared, that is, whether the input voice is input by the preset user is determined. When both the text and the voiceprint are passed, it is determined that the hardware resource related to face recognition may be started through voice comparison. Similarly, a manner of triggering the voice to start another fifth authentication manner is similar to that of face recognition, and details are not described herein again.

It is particularly noted that the fourth authentication manner and the fifth authentication manner may be the same authentication manner of the intelligent device or different authentication manners of the intelligent device, and the two authentication manners are marked by using different serial numbers only to distinguish that the two authentication manners perform starting in different startup manners.

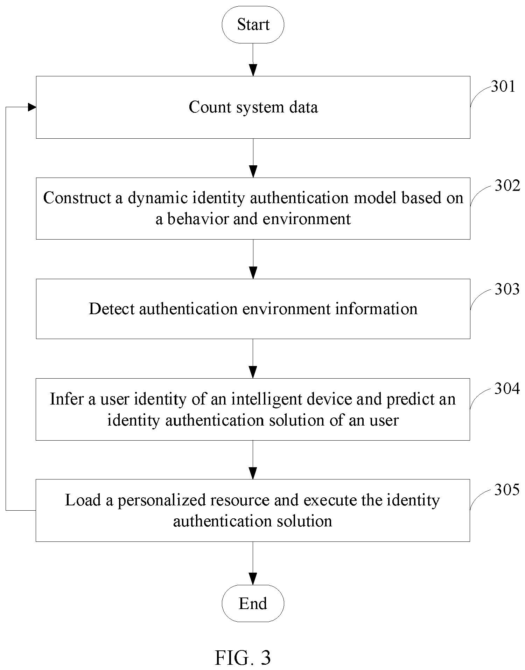

FIG. 3 is a specific schematic flowchart of an authentication method according to an embodiment of this application. To describe the authentication method in this embodiment of this application more clearly, the following uses an example in which an intelligent device is a vehicle for specific description.

301: Count system authentication behavior.

The following information about historical authentication behavior during vehicle running is collected.
1. Authentication user body: The authentication user body includes a user ID (that is, an authentication user identifier) of an in-vehicle infotainment of a vehicle, where the ID may include one or more of a digit, a letter, and a special character. This is not particularly limited in this embodiment.
2. Authentication manner: The authentication manner includes Bluetooth authentication, visual identification, acoustic identification, a QR code, a password, and the like.
3. Authentication time: A system time of the vehicle during the authentication may be used as the authentication time, which may include year, month, and day (for example, 2020/10/11), and may be specific to an authentication time point, which may include hour, minute, and second (for example, 8:00).
4. Authentication location: The authentication location includes location information and a location attribute thereof, where the location information may be location information such as GPS information (such as longitude and latitude) and IP address information; and the location attribute is to classify the authentication location into several types based on security. In this embodiment, the authentication place is classified into two types: a private place and a public place. The private place is a secure place. Places of the user's home and company may be determined through machine learning, and these places are marked as private places. A place other than the private place is a public place, and is a non-secure place. When the authentication location is obtained, the location attribute of the authentication location may be determined based on the authentication location and a pre-stored private location.
5. Authentication service attribute: All services are classified into several categories in advance based on an authentication security level requirement and a service type, for example, classified into an entertainment service, a function service, a privacy service, and a payment service, where the entertainment service is a service such as music playing and photo playing; the function service is a basic function service of the vehicle, such as a File; the privacy service relates to personal information of the user, such as WeChat and QQ; and the payment service relates to financial information of the user.
6. Authentication success rate: The authentication success rate is a quantity of authentication attempts (authentication times for short in the table).
7. System environment during authentication: A system environment includes illumination, noise, a wireless environment, a network environment, and system stability.

Table 1 may be obtained by using the collected data. For example, at 8:00 a.m. on October 20, 2020, the ambient illumination of the vehicle is 800.10 Lux (Lux), and the ambient noise is 50 db (db).

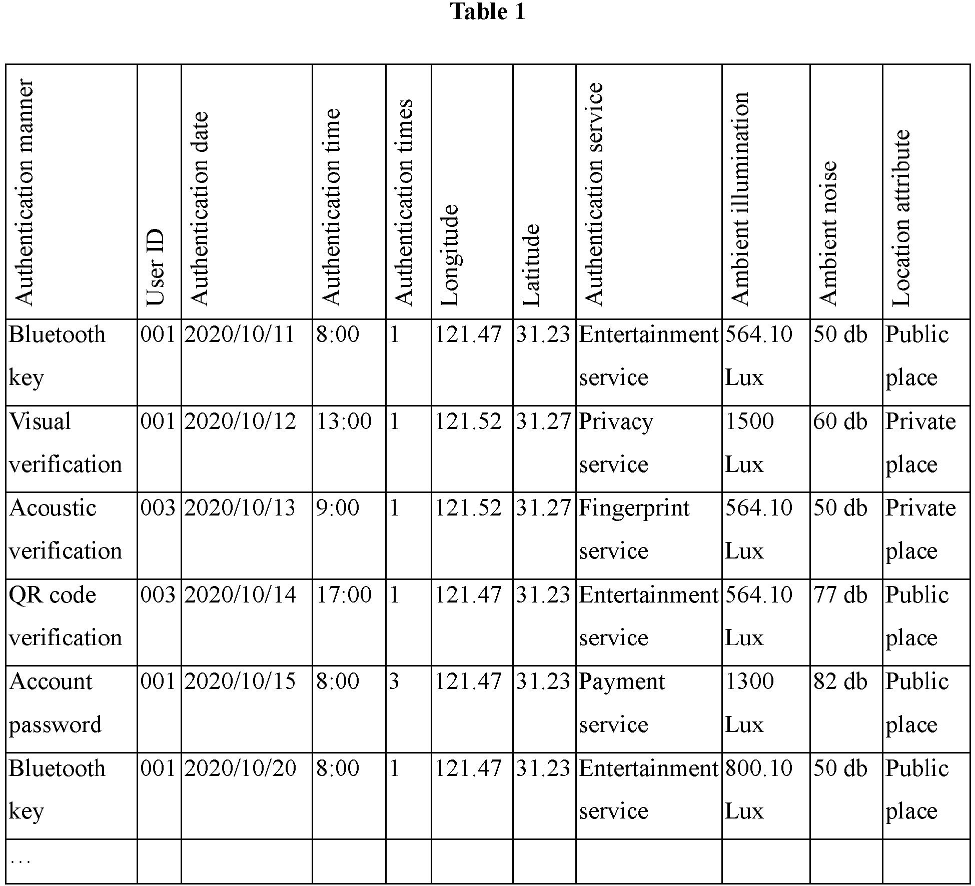

302: Construct a dynamic identity authentication model based on the behavior and an environment characteristic.

The dynamic identity authentication model is constructed based on a correlation between the counting of historical behaviors and the system environment. Evaluation dimensions of the model include (but are not limited to) the following.
1. Authentication user: The user may periodically log in to the system based on the user's periodical login behavior.
2. Authentication user status: A distance between a location of the user and a vehicle (if the distance between the user and the vehicle is small, an authentication manner suitable for a small distance may be selected, or if the distance is long, an authentication manner suitable for a large distance may be selected). Check whether facial features of the user are clear (whether there are sunglasses, a scarf, or the like). If the facial features are unclear, visual recognition is not recommended. Check whether voice features of the user are clear (whether there are unstable factors such as emotional excitement and sandiness. If the voice features are unclear, acoustic recognition is not recommended. Check whether user activities are convenient (a Bluetooth key, a fingerprint, password verification, and the like are not recommended in scenarios such as holding objects with both hands).
3. Authentication manner: In the same service scenario, the latest authentication manner is more frequently used.
4. Authentication time: Authentication is implemented at a similar time to the time when the authentication is frequently performed in the history. Particularly, a high-frequency authentication period is determined based on the data collected in 301. If a time subsequently obtained in authentication environment information does not belong to the high-frequency authentication period or does not belong to an acceptable error range of the high-frequency authentication period, the authentication requirement needs to be improved. For example, the historical behavior data is used to determine that the high-frequency authentication time is an off-duty time, that is, 6 p.m., and when it is detected that authentication is performed at 12 p.m., the security level needs to be improved, that is, the authentication requirement needs to be improved.
5. Authentication location: When an authentication security level of the public place is high, an authentication security level of the private place may be relatively low.
6. Authentication service attribute: When an authentication requirement level of a service with large value is a high, an authentication level of a relatively public service may be lowered.
7. Authentication success rate: When a success rate of a plurality of historical authentications is low, the security level of the next authentication needs to be increased.
8. Authentication environment: Face and image authentication manners are not recommended in poor illumination conditions. When noise interference is high, the authentication manner such as voiceprint is not recommended.

In addition, services that can be supported by various authentication manners and dependency on the environment and the user status can be defined, as shown in Table 2.

**Table 2**

| Authentication manner | Available Service | Ambient illumination | User status dependency | Network dependency | Ambient noise | Location attribute |
|---|---|---|---|---|---|---|
| Bluetooth key | Entertainment service, function service, and privacy service | - | Hands moveable | - | - | - |
| Visual verification | Entertainment service, function service, privacy service, and payment service | 100 Lux to 2500 Lux | Clear facial feature | - | - | Private place |
| Acoustic verification | Entertainment service, function service, privacy service, and payment service | - | Stable voice | - | Less than 80 db | - |
| QR code verification | Entertainment service, function service, and privacy service | - | Hands moveable | Stable network connection | - | - |
| Account password | Entertainment service, function service, and privacy service | - | Hands moveable | Stable network connection | - | - |

On the other hand, security level standard requirements corresponding to different authentication manners in different scenarios may be further defined, as shown in Table 3. The authentication standard in Table 3 may be understood as the authentication requirement.

**Table 3**

| Authentication manner | Ambient illumination | Ambient noise | Failed attempts | Time | Location |
|---|---|---|---|---|---|
| Bluetooth key | - | - | - | - | - |
| Visual verification | In a low-illumination scenario, reduce error acceptance rate | - | When there are more than three failures, improve authentication requirements | At a non-high-frequency authentication period, improve authentication requirements | In a public place, improve authentication requirements |
| Acoustic verification | - | In a high noise scenario, reduce error acceptance rate | When there are more than three failures, improve authentication requirements | At a non-high-frequency authentication period, improve authentication requirements | In a public Place, improve authentication requirements |
| QR code verification | - | - | - | - | - |
| Account password | - | - | When there are more than five failures, improve authentication requirements | - | - |

In some possible embodiments, a wireless environment also affects prediction of the authentication manner. A prediction rule of the authentication manner may be set based on an actual requirement. For example, it may be set that when a quantity of Bluetooth broadcast signals around the vehicle exceeds a specific threshold, the Bluetooth authentication manner is not recommended, so that authentication of another terminal is not interfered. Alternatively, when there is no network environment, QR code scanning authentication and password identification authentication are not recommended. Particularly, when it is detected that the vehicle is in a cracked status, no authentication operation is performed, and all authentication channels are closed.

303: Detect authentication environment information of a vehicle.

The authentication environment information of the vehicle is detected in the high-frequency authentication period, where the authentication environment information may include a location and a location attribute of the in-vehicle system, a time of the in-vehicle system, environment of the in-vehicle system (dimensions such as illumination, noise, a wireless environment, a network environment, and system stability), and a subject status of the authentication user (a user location, whether facial features are clear, whether voice features are stable, and whether a user activity status is convenient), and the like. Table 4 and Table 5 may be obtained.

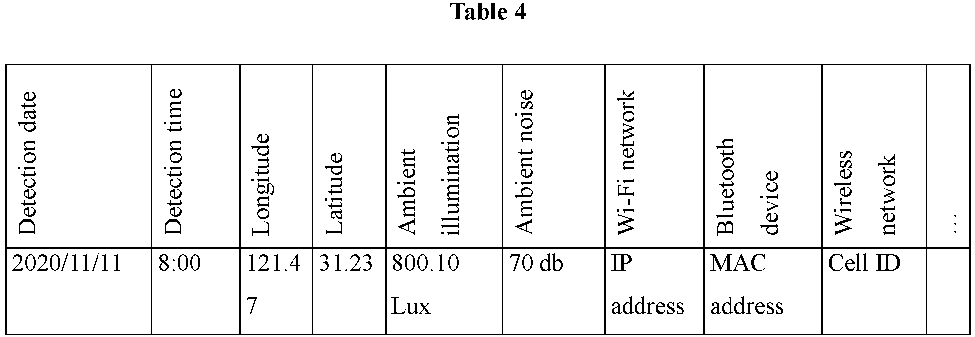

**Table 5**

| Detection date | Detection time | User facial feature | User voice feature | Whether hands can be moved |
|---|---|---|---|---|
| 2020/11/11 | 8:00 | Clear | Stable | Yes |

304: Infer a user identity of the intelligent device, and predict an identity authentication solution of the user.

In this embodiment of this application, the dynamic identity authentication model uses Table 1, Table 2, and Table 3 and a related prediction rule to input the authentication environment information obtained in step 303 into the model for prediction, to obtain estimated information, including a predicted system login user, a predicted time at which an authentication operation occurs, an occurrence probability of the authentication operation, a priority sequence of a recommended authentication manner, a hardware resource corresponding to the recommended authentication manner, a risk level corresponding to the recommended authentication manner, and an authentication threshold and/or an authentication alarm threshold corresponding to the recommended authentication manner.

The dynamic identity authentication model may process the historical authentication behavior data and the obtained authentication environment information by using a time prediction method such as a Bayesian statistical prediction method, to infer a possible occurrence time of the authentication operation. In addition, the dynamic identity authentication model performs estimation processing based on the historical authentication behavior data and the obtained authentication environment information, and may further obtain the foregoing estimated information. Specifically, the method includes:
determining a frequency and a risk level of each authentication manner of the vehicle corresponding to the location information based on the location information in the authentication environment information and historical authentication location;
predicting a frequency and a risk level of each authentication manner corresponding to current external environment based on external environment information such as illumination and noise in the authentication environment information and historical authentication external environment data; and
predicting the frequency and risk level of the current authentication time based on the authentication time and historical authentication time in the authentication environment information.

The dynamic identity authentication model determines authentication thresholds of different recommended authentication manners based on the foregoing determined risk levels.

305: Load a personalized resource, execute the identity authentication solution, and iterate the dynamic identity authentication model.

According to the system login user inferred in step 304, different personalized resources of the user are pre-loaded, for example, an OS system (multimedia, navigation, and the like), an angle and a height of a vehicle seat, and an air conditioner temperature. For example, it is assumed that user 001 may log in to the current system, personalized resources of user 001 are loaded. This may reduce system resource consumption and system startup duration.

In addition, based on the predicted time at which the authentication operation occurs, the hardware resource of the vehicle corresponding to the authentication manner with the highest priority in the recommended authentication manner is started before the time. For example, assuming that the authentication manner recommended in step 304 is Bluetooth key, voiceprint verification, face recognition, and login password verification, and Bluetooth key and voiceprint verification are authentication manners with the highest priority, before the predicted time at which the authentication operation occurs, the Bluetooth module and the microphone of the vehicle are started to support the requirement of the user entering the vehicle without feeling. The authentication interaction operation of the user is reduced, and the standby duration is prolonged.

When the authentication triggering operation is detected, the identity authentication solution is executed and the counting of the system authentication behaviors is updated. Specifically, the authentication manner with the highest priority is used to perform authentication on the identity of the user. If the authentication succeeds, a corresponding service capability is loaded, and corresponding permission of the vehicle is granted. If the authentication fails, remedial measures are taken to warn a system maintainer. For example, if the voiceprint fails to be verified and recognized for a plurality of times, the vehicle owner is notified through related methods such as using an SMS message.

Table 1 is refreshed according to each authentication behavior of the user, to refresh the probability relationship between the user behaviors, the environment, and the authentication manner, and update model parameters of the dynamic identity authentication model of the user, to obtain the latest recommended authentication manner and authentication threshold, and perform dynamic refreshing. In addition, the dynamic identity authentication model may further change the authentication manner with the highest priority based on the authentication environment information during user authentication and the status of the authentication user. For example, if the authentication manner with the highest priority is voiceprint recognition, and environment noise during authentication is relatively loud, voiceprint recognition authentication is closed, and face recognition is used as the authentication manner with the highest priority, and face recognition authentication is started. For another example, it is assumed that the authentication manner with the highest priority is face recognition. When it is detected that the user wears sunglasses during authentication, that is, the face is blocked, voiceprint recognition is selected as the authentication manner with the highest priority, the camera is turned off, and the microphone is turned on.

In addition, the dynamic identity authentication model may also update the authentication threshold of the authentication manner in real time based on the authentication environment information when the user performs authentication. For example, when the current authentication time of the user is different from the high-frequency authentication time segment, or the current authentication time is not within an acceptable error range of the high-frequency authentication time segment, or the current authentication time is recognized as a dangerous time (for example, a late night time segment), the authentication threshold needs to be adjusted to improve the authentication requirement. On the other hand, if it is determined that a place in which the current user performs authentication is an insecure place (for example, a public parking lot), the authentication threshold also needs to be adjusted to improve an authentication requirement, to avoid manual violent cracking. Finally, when the quantity of user authentication failures is too large, the authentication requirement needs to be improved.

It is particularly noted that Table 1, Table 2, and Table 3 are merely examples, and do not constitute any limitation on the protection scope of this application.

It can be learned that, according to the authentication method in this application, an authentication hardware resource is dynamically loaded and an authentication-related threshold is set based on the user behaviors and input of environment characteristic information, so that scenario-based dynamic identity authentication is implemented, and user experience and security are enhanced. On the same intelligent device, based on the status of a target user, an appropriate authentication manner is autonomously performed to implement user-unaware authentication. This is compatible with ease of usage, security, and system resource consumption.

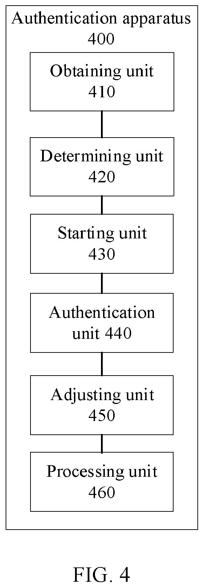

An embodiment of this application further provides an authentication apparatus applied to an intelligent apparatus. FIG. 4 is a component block diagram of functional units of an authentication apparatus according to an embodiment of this application. An authentication apparatus 400 includes an obtaining unit 410, a determining unit 420, and a starting unit 430.

The obtaining unit 410 is configured to obtain authentication environment information.

The determining unit 420 is configured to determine estimated information of an authentication operation of an intelligent device based on the authentication environment information and historical authentication data, where the estimated information includes a first time, an occurrence probability, and a first authentication manner used to perform the authentication operation, the first time is an estimated occurrence time of the authentication operation, and the occurrence probability is an estimated occurrence probability of the authentication operation.

The starting unit 430 is configured to start, at the first time or before the first time when the occurrence probability is greater than a probability threshold, a hardware resource that is of the intelligent device and that is used for performing the authentication operation by using the first authentication manner.

According to the authentication apparatus in this embodiment of this application, the hardware resource corresponding to the intelligent device is pre-started by estimating related information of the authentication operation, so that authentication power consumption of the intelligent device can be effectively reduced, and user experience is improved.

The authentication apparatus 400 may be configured to perform the foregoing authentication method. Specifically, the obtaining unit 410 is configured to perform step 201, the determining unit 420 is configured to perform step 202, and the starting unit 430 is configured to perform step 203. More specifically, the obtaining unit 410 may be implemented by using one or more of a camera, a microphone, a GPS module, and the like, and the determining unit 420 and the starting unit 430 may be implemented by using a processor and the like.

In some possible implementations, with reference to FIG. 4, the authentication apparatus further includes:
an authentication unit 440, configured to perform authentication on an identity of a user by using the first authentication manner when the user triggers the authentication operation. The authentication unit 440 may be implemented by using a camera, a microphone, or the like in combination with a processor.

In some possible implementations, the determining unit 420 is further configured to:
determine, based on the authentication environment information and the historical authentication data, an authentication threshold corresponding to the first authentication manner; and
the authentication unit is specifically configured to:
   perform authentication on the identity of the user based on the authentication threshold corresponding to the first authentication manner.

In some possible implementations, in the aspect of determining, based on the authentication environment information and the historical authentication data, an authentication threshold corresponding to the first authentication manner, the determining unit 420 is specifically configured to:
determine, based on the authentication environment information and the historical authentication data, a risk level corresponding to the first authentication manner; and
determine, based on the risk level, the authentication threshold corresponding to the first authentication manner.

In some possible implementations, the obtaining unit 410 is further configured to obtain a quantity of authentication failures of the user.

With reference to FIG. 4, the authentication apparatus 400 further includes:
an adjusting unit 450, configured to adjust, based on the quantity of authentication failures, the authentication threshold for performing authentication on the identity of the user by using the first authentication manner. The adjusting unit 450 may be implemented by using a processor or the like.

In some possible implementations, before the authentication unit 440 performs authentication on an identity of a user by using the first authentication manner, the obtaining unit 410 is further configured to obtain authentication environment information corresponding to a trigger moment at which the user triggers the authentication operation; and the adjusting unit 450 is further configured to adjust, based on the authentication environment information corresponding to the trigger moment, the authentication threshold for performing authentication on the identity of the user by using the first authentication manner.

In some possible implementations, the first time includes a time periodicity, and the starting unit 430 is specifically configured to:
start, within the time periodicity when the occurrence probability is greater than the probability threshold, the hardware resource that is of the intelligent device and that is used for performing the authentication operation by using the first authentication manner.

In some possible implementations, in the aspect of obtaining authentication environment information, the obtaining unit 410 is specifically configured to:
determine an authentication period based on the historical authentication data of the intelligent device; and
obtain the authentication environment information based on the authentication period.

In some possible implementations, the estimated information further includes first user information, and a user indicated by the first user information is a predicted user that triggers the authentication operation; and
the adjusting unit 450 is further configured to adjust, when the occurrence probability is greater than the probability threshold, the intelligent device at the first time or before the first time based on historical usage data of the user indicated by the first user information.

In some possible implementations, in the aspect of determining, based on the authentication environment information and the historical authentication data, the first authentication manner in the estimated information of the authentication operation of intelligent device, the determining unit 420 is specifically configured to:
determine, based on the authentication environment information and the historical authentication data, an authentication manner with a highest authentication priority of the authentication operation of the intelligent device as the first authentication manner.

In some possible implementations, before the starting unit 430 starts the hardware resource,
the obtaining unit 410 is further configured to obtain a first distance between the intelligent device and an authentication user; and
the determining unit 420 is further configured to determine a second authentication manner corresponding to the first distance based on the first distance and a mapping relationship, where the mapping relationship is a correspondence between an authentication manner and a distance.

With reference to FIG. 4, the authentication apparatus 400 further includes:
a processing unit 460, configured to update the first authentication manner to the second authentication manner when the second authentication manner is different from the first authentication manner. The processing unit 460 may be implemented by using a processor or the like.

In some possible implementations, after the starting unit 430 starts the hardware resource and before the authentication apparatus detects that the user triggers the authentication operation, the obtaining unit 410 is further configured to obtain a second distance between the intelligent device and an authentication user; and the determining unit 420 is further configured to determine, based on the second distance and a mapping relationship, a third authentication manner corresponding to the second distance, where the mapping relationship is a correspondence between an authentication manner and a distance.

The processing unit 460 is further configured to, when the third authentication manner is different from the first authentication manner, close the hardware resource of the intelligent device corresponding to the first authentication manner, and start a hardware resource of the intelligent device corresponding to the third authentication manner.

In some possible implementations, the authentication environment information includes one or more of time information, location information of the intelligent device, internal or external environment information of the intelligent device, and status information of an authentication user subject. The historical authentication data includes one or more of the following data (more refers to more than two): an authentication user identifier, an authentication manner, an authentication time, an authentication location, an attribute of a service associated with the authentication operation, the quantity of authentication failures, and internal or external environment information that is of the intelligent device and that corresponds to the authentication time. Attributes of services having a same authentication security level and a same service type are the same.

In some possible implementations, the starting unit 430 is further configured to, in response to a start operation of a fourth authentication manner of the intelligent device performed by the user, start a hardware resource that is of the intelligent device and that is used for performing an authentication operation by using the fourth authentication manner.

In some possible implementations, the obtaining unit 410 is further configured to obtain status information of the intelligent device and/or the user.

The starting unit 430 is further configured to, when the status information matches preset status information corresponding to a fifth authentication manner, start a hardware resource that is of the intelligent device and that is used for performing an authentication operation by using the fifth authentication manner.
In this embodiment of this application, it should be understood that for a specific function implementation of the authentication apparatus 400, refer to the description of the authentication method in any one of the foregoing embodiments. Details are not described herein again. The authentication apparatus disclosed in this embodiment may be implemented in another manner. For example, the described apparatus embodiments are merely examples. For example, division into the units is merely logical function division, and may be other division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The foregoing units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional module.

An embodiment of this application further provides a chip system. The chip system includes at least one processor, a memory, and an interface circuit. The memory, the interface circuit, and the at least one processor are interconnected by using a line. The at least one memory stores instructions. When the instructions are executed by the processor, any authentication method recorded in the foregoing method embodiments is implemented.

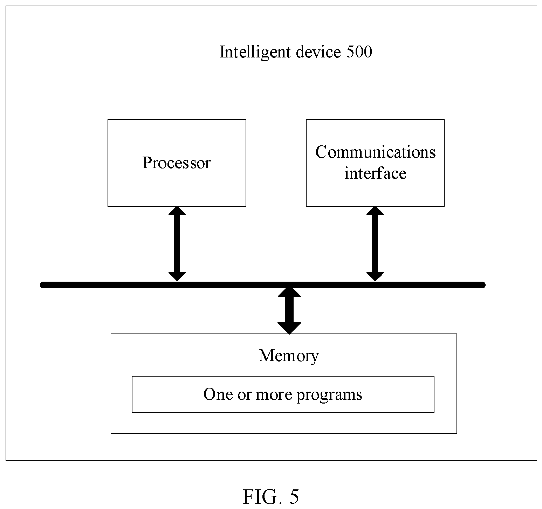

An embodiment of this application further provides an intelligent device. FIG. 5 is a schematic diagram of a structure of an intelligent device according to an embodiment of this application. An intelligent device 500 includes a processor, a memory, and a communications interface. One or more programs are stored in the memory and are configured to be executed by the processor. The program includes instructions used to perform steps in any authentication method recorded in the foregoing method embodiments.

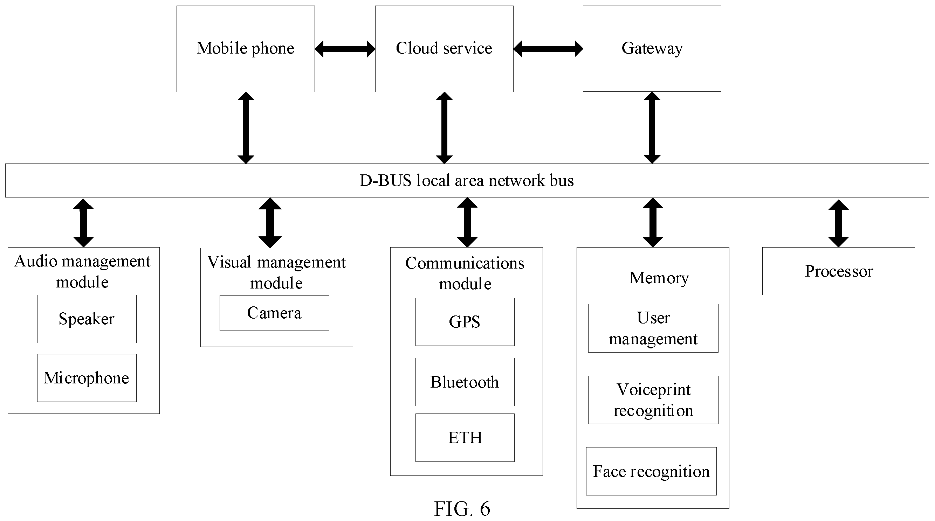

FIG. 6 is a specific schematic diagram of a structure of an intelligent device according to an embodiment of this application. The intelligent device includes a processor, a memory, a communications module, a visual management module, and an audio management module. The processor runs program instructions of each module stored in a memory or another memory. The processor may directly access the memory, the audio management module, and the video management module by using the system bus. The memory includes a memory and a disk memory, and stored content includes a plurality of modules such as user account management, voiceprint recognition, and face recognition. The audio management module is responsible for performing interface and management on an audio device (a speaker and a microphone). The video management module is responsible for performing interface and management on a video device (camera), the communications module is responsible for performing interface and management on an interconnected device (Bluetooth, Wi-Fi, GPS, Ethernet ETH, and the like), and the processor may access various cloud services and cloud service management modules by using a network interface. An intelligent terminal such as a mobile phone may be interconnected with an intelligent device through Bluetooth, scanning, and the like.

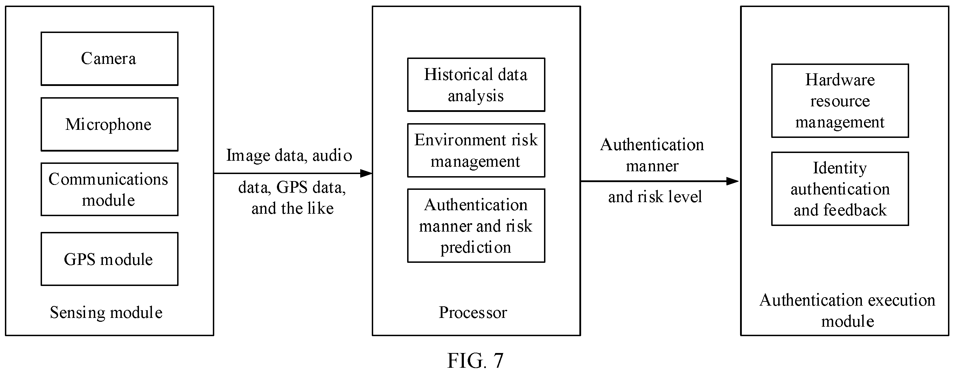

FIG. 7 is a schematic diagram of function division of an intelligent device according to an embodiment of this application. A system architecture of the intelligent device includes three parts: a sensing module, a processor, and an authentication execution module. The processor includes the following submodules: historical data analysis, environment risk management, and authentication manner and risk prediction.

More specifically, the sensing module mainly includes:
a camera, configured to periodically collect video or image data of a surrounding environment of a user or the intelligent device, and send the data to the processor, to obtain a condition such as an ambient illumination value and a surrounding object;
a microphone, configured to periodically collect audio data of a surrounding environment of a user and the intelligent device, and send the data to the processor;
a communications module, configured to obtain information such as a radio environment and a network environment of the system, and send the data to the processor; and
a GPS module, configured to obtain location data of the system in real time and send the data to a central processing unit; and location attribute and local time can be determined based on the location data.

The processor is configured to implement the following functions.

Historical data analysis: Collect statistics on historical identity authentication behaviors of the intelligent device and evaluate user preferences.

Environment risk management: Predict security risks of different authentication manners based on the current authentication environment information.

Authentication manner and risk prediction: Predict authentication behaviors, authentication manners and risks that are of system users, and output information to the authentication execution module based on the user behavior analysis and the environment risk management.

Finally, the authentication execution module is used for:
Hardware resource management: dynamically load a hardware resource used for system authentication based on recommended authentication manner, different time, and different environments; and
identity authentication and feedback: perform authentication operation and perform different feedback operations for authentication success and authentication failure. For example, when the authentication fails, a speaker is controlled to make a sound for warning. For another example, when a quantity of authentication failures exceeds a specific threshold, a notification SMS message is sent to an owner of the intelligent device, to remind the owner of risks.

An embodiment of this application further provides a computer-readable storage medium. The computer-readable storage medium stores a computer program. The computer program is executed by a processor to implement some or all of the steps of any authentication method recorded in the foregoing method embodiments. The computer-readable storage medium may include a flash memory disk, a read-only memory (Read-Only Memory, ROM for short), a random access memory (Random Access Memory, RAM for short), a magnetic disk, an optical disc, or the like.

An embodiment of this application further provides a computer program product. The computer program product includes instructions. When the instructions are run on a computer, the computer is enabled to perform any authentication method recorded in the foregoing method embodiments.

It should be noted that for ease of brief description, the foregoing method embodiments are represented as a series of action combinations. However, a person skilled in the art should appreciate that this application is not limited to the described order of the actions, because according to this application, some steps may be performed in other orders or simultaneously. It should be further appreciated by a person skilled in the art that the embodiments described in this specification all belong to optional embodiments, and the involved actions and modules are not necessarily in this application.

In the foregoing embodiments, the description of each embodiment has respective focuses. For a part that is not described in detail in an embodiment, refer to related descriptions in other embodiments. In addition, a person of ordinary skill in the art may make variations and modifications to this application in terms of the specific implementations and application scopes based on the ideas of this application. Therefore, the content of this specification shall not be construed as a limitation to this application.

## Claims

1. An authentication method, applied to an intelligent apparatus and comprising:
obtaining authentication environment information;
determining estimated information of an authentication operation of an intelligent device based on the authentication environment information and historical authentication data, wherein the estimated information comprises a first time, an occurrence probability, and a first authentication manner used to perform the authentication operation, the first time is an estimated occurrence time of the authentication operation, and the occurrence probability is an estimated occurrence probability of the authentication operation; and
starting, at the first time or before the first time when the occurrence probability is greater than a probability threshold, a hardware resource that is of the intelligent device and that is used for performing the authentication operation by using the first authentication manner.

2. The method according to claim 1, wherein the method further comprises:
performing authentication on an identity of a user by using the first authentication manner when the user triggers the authentication operation.

3. The method according to claim 2, wherein the method further comprises:
determining, based on the authentication environment information and the historical authentication data, an authentication threshold corresponding to the first authentication manner; and
the performing authentication on an identity of a user by using the first authentication manner specifically comprises:
performing authentication on the identity of the user based on the authentication threshold corresponding to the first authentication manner.

4. The method according to claim 3, wherein the determining, based on the authentication environment information and the historical authentication data, an authentication threshold corresponding to the first authentication manner comprises:
determining, based on the authentication environment information and the historical authentication data, a risk level corresponding to the first authentication manner; and
determining, based on the risk level, the authentication threshold corresponding to the first authentication manner.

5. The method according to any one of claims 2 to 4, wherein the method further comprises:
obtaining a quantity of authentication failures of the user; and
adjusting, based on the quantity of authentication failures, the authentication threshold for performing authentication on the identity of the user by using the first authentication manner.

6. The method according to any one of claims 2 to 4, wherein before the performing authentication on an identity of a user by using the first authentication manner, the method further comprises:
obtaining authentication environment information corresponding to a trigger moment at which the user triggers the authentication operation; and
adjusting, based on the authentication environment information corresponding to the trigger moment, the authentication threshold for performing authentication on the identity of the user by using the first authentication manner.

7. The method according to any one of claims 1 to 6, wherein the first time comprises a time periodicity, and the method comprises: starting, within the time periodicity when the occurrence probability is greater than the probability threshold, the hardware resource that is of the intelligent device and that is used for performing the authentication operation by using the first authentication manner.

8. The method according to any one of claims 1 to 6, wherein the obtaining authentication environment information specifically comprises:
determining an authentication period based on the historical authentication data of the intelligent device; and
obtaining the authentication environment information based on the authentication period.

9. The method according to any one of claims 1 to 6, wherein the estimated information further comprises first user information, and a user indicated by the first user information is a predicted user that triggers the authentication operation; and the method further comprises:
adjusting, when the occurrence probability is greater than the probability threshold, the intelligent device at the first time or before the first time based on historical usage data of the user indicated by the first user information.

10. The method according to any one of claims 1 to 6, wherein the determining, based on the authentication environment information and the historical authentication data, the first authentication manner in the estimated information comprises:
determining, based on the authentication environment information and the historical authentication data, an authentication manner with a highest authentication priority of the authentication operation of the intelligent device as the first authentication manner.

11. The method according to any one of claims 1 to 6, wherein before starting the hardware resource, the method further comprises:
obtaining a first distance between the intelligent device and an authentication user;
determining a second authentication manner corresponding to the first distance based on the first distance and a mapping relationship, wherein the mapping relationship is a correspondence between an authentication manner and a distance; and
updating the first authentication manner to the second authentication manner when the second authentication manner is different from the first authentication manner.

12. The method according to any one of claims 1 to 6, wherein after the hardware resource is started and before the user triggers the authentication operation, the method further comprises:
obtaining a second distance between the intelligent device and an authentication user;
determining, based on the second distance and a mapping relationship, a third authentication manner corresponding to the second distance, wherein the mapping relationship is a correspondence between an authentication manner and a distance; and
when the third authentication manner is different from the first authentication manner, closing the hardware resource of the intelligent device corresponding to the first authentication manner, and starting a hardware resource of the intelligent device corresponding to the third authentication manner.

13. The method according to any one of claims 1 to 6, wherein the authentication environment information comprises one or more of time information, location information of the intelligent device, internal or external environment information of the intelligent device, and status information of an authentication user subject.

14. The method according to any one of claims 1 to 6, wherein the historical authentication data comprises one or more of the following data: an authentication user identifier, an authentication manner, an authentication time, an authentication location, an attribute of a service associated with the authentication operation, the quantity of authentication failures, and internal or external environment information that is of the intelligent device and that corresponds to the authentication time.

15. The method according to any one of claims 1 to 6, wherein the method further comprises:
in response to a start operation performed by the user on the intelligent device in a fourth authentication manner, starting a hardware resource that is of the intelligent device and that is used for performing an authentication operation by using the fourth authentication manner.

16. The method according to any one of claims 1 to 6, wherein the method further comprises:
obtaining status information of the intelligent device and/or the user; and
when the status information matches preset status information corresponding to a fifth authentication manner, starting a hardware resource that is of the intelligent device and that is used for performing an authentication operation by using the fifth authentication manner.

17. An authentication apparatus, applied to an intelligent apparatus and comprising:
an obtaining unit, configured to obtain authentication environment information;
a determining unit, configured to determine estimated information of an authentication operation of an intelligent device based on the authentication environment information and historical authentication data, wherein the estimated information comprises a first time, an occurrence probability, and a first authentication manner used to perform the authentication operation, the first time is an estimated occurrence time of the authentication operation, and the occurrence probability is an estimated occurrence probability of the authentication operation; and
a starting unit, configured to start, at the first time or before the first time, when the occurrence probability is greater than a probability threshold, a hardware resource that is of the intelligent device and that is used for performing the authentication operation by using the first authentication manner.

18. The authentication apparatus according to claim 17, wherein the authentication apparatus further comprises:
an authentication unit, configured to perform authentication on an identity of a user by using the first authentication manner when the user triggers the authentication operation.

19. The apparatus according to claim 18, wherein the determining unit is further configured to:
determine, based on the authentication environment information and the historical authentication data, an authentication threshold corresponding to the first authentication manner; and
the authentication unit is specifically configured to:
perform authentication on the identity of the user based on the authentication threshold corresponding to the first authentication manner.

20. The authentication apparatus according to claim 19, wherein in the aspect of determining, based on the authentication environment information and the historical authentication data, an authentication threshold corresponding to the first authentication manner, the determining unit is specifically configured to:
determine, based on the authentication environment information and the historical authentication data, a risk level corresponding to the first authentication manner; and
determining, based on the risk level, the authentication threshold corresponding to the first authentication manner.

21. The authentication apparatus according to any one of claims 18 to 20, wherein the obtaining unit is further configured to obtain a quantity of authentication failures of the user; and
the authentication apparatus further comprises:
an adjusting unit, configured to adjust, based on the quantity of authentication failures, the authentication threshold for performing authentication on the identity of the user by using the first authentication manner.

22. The authentication apparatus according to any one of claims 18 to 20, wherein before the authentication unit performs authentication on an identity of a user by using the first authentication manner,
the obtaining unit is further configured to obtain authentication environment information corresponding to a trigger moment at which the user triggers the authentication operation; and
the authentication apparatus further comprises:
the adjusting unit, configured to adjust, based on the authentication environment information corresponding to the trigger moment, the authentication threshold for performing authentication on the identity of the user by using the first authentication manner.

23. The authentication apparatus according to any one of claims 17 to 22, wherein the first time comprises a time periodicity, and the starting unit is specifically configured to:
start, within the time periodicity when the occurrence probability is greater than the probability threshold, the hardware resource that is of the intelligent device and that is used for performing the authentication operation by using the first authentication manner.

24. The authentication apparatus according to any one of claims 17 to 22, wherein in the aspect of obtaining authentication environment information, the obtaining unit is specifically configured to:
determine an authentication period based on the historical authentication data of the intelligent device; and
obtaining the authentication environment information based on the authentication period.

25. The authentication apparatus according to any one of claims 17 to 22, wherein the estimated information further comprises first user information, and a user indicated by the first user information is a predicted user that triggers the authentication operation; and
the authentication apparatus further comprises:
an adjusting unit, configured to adjust, when the occurrence probability is greater than the probability threshold, the intelligent device at the first time or before the first time based on historical usage data of the user indicated by the first user information.

26. The authentication apparatus according to any one of claims 17 to 22, wherein in the aspect of determining, based on the authentication environment information and the historical authentication data, the first authentication manner in the estimated information of the authentication operation of intelligent device, the determining unit is specifically configured to:
determine, based on the authentication environment information and the historical authentication data, an authentication manner with a highest authentication priority of the authentication operation of the intelligent device as the first authentication manner.

27. The authentication apparatus according to any one of claims 17 to 22, wherein before the starting unit starts the hardware resource,
the obtaining unit is further configured to obtain a first distance between the intelligent device and an authentication user; and
the determining unit is further configured to determine a second authentication manner corresponding to the first distance based on the first distance and a mapping relationship, wherein the mapping relationship is a correspondence between an authentication manner and a distance; and
the authentication apparatus further comprises:
a processing unit, configured to update the first authentication manner to the second authentication manner when the second authentication manner is different from the first authentication manner.

28. The authentication apparatus according to any one of claims 17 to 22, wherein after the starting unit starts the hardware resource and before the authentication apparatus detects that the user triggers the authentication operation,
the obtaining unit is further configured to obtain a second distance between the intelligent device and an authentication user; and
the determining unit is further configured to determine, based on the second distance and a mapping relationship, a third authentication manner corresponding to the second distance, wherein the mapping relationship is a correspondence between an authentication manner and a distance; and
the authentication apparatus further comprises:
a processing unit, configured to, when the third authentication manner is different from the first authentication manner, close the hardware resource of the intelligent device corresponding to the first authentication manner, and start a hardware resource of the intelligent device corresponding to the third authentication manner.

29. The authentication apparatus according to any one of claims 17 to 22, wherein the authentication environment information comprises one or more of time information, location information of the intelligent device, internal or external environment information of the intelligent device, and status information of an authentication user subject.

30. The authentication apparatus according to any one of claims 17 to 22, wherein the historical authentication data comprises one or more of the following data: an authentication user identifier, an authentication manner, an authentication time, an authentication location, an attribute of a service associated with the authentication operation, the quantity of authentication failures, and internal or external environment information that is of the intelligent device and that corresponds to the authentication time.

31. The authentication apparatus according to any one of claims 17 to 22, wherein the starting unit is further configured to:
in response to a start operation of a fourth authentication manner of the intelligent device performed by the user, start a hardware resource that is of the intelligent device and that is used for performing an authentication operation by using the fourth authentication manner.

32. The authentication apparatus according to any one of claims 17 to 22, wherein the obtaining unit is further configured to:
obtain status information of the intelligent device and/or the user; and
the starting unit is further configured to:
when the status information matches preset status information corresponding to a fifth authentication manner, start a hardware resource that is of the intelligent device and that is used for performing an authentication operation by using the fifth authentication manner.

33. A chip system, wherein the chip system comprises at least one processor, a memory, and an interface circuit, the memory, the interface circuit, and the at least one processor are interconnected through a line, the at least one memory stores instructions, and when the instructions are executed by the processor, the method according to any one of claims 1 to 16 is implemented.

34. An intelligent device, comprising a processor, a memory, and a communications interface, wherein one or more programs are stored in the memory and configured to be executed by the processor, and the program comprises instructions used to perform steps in the method according to any one of claims 1 to 16.

35. A computer-readable storage medium, wherein the computer-readable storage medium stores a computer program; and when the computer program is executed by a processor, the method according to any one of claims 1 to 16 is implemented.
